# EUROPÄISCHE PATENTSCHRIFT

(11) **EP 4 375 176 B1**
(45) Veröffentlichungstag und Bekanntmachung des Hinweises auf die Patenterteilung: **20.05.2026**
(21) Anmeldenummer: 23211300.1
(22) Anmeldetag: 21.11.2023
(51) Int. Cl.: B62K 3/00, B62K 15/00

(54) **EINKLAPPBARER LENKER**
RETRACTABLE HANDLEBAR
GUIDON PLIANT

(30) Priorität: 28.11.2022 DE 102022131422
(43) Veröffentlichungstag der Anmeldung: 29.05.2024
(73) Patentinhaber: Driveman GmbH, 58339 Breckerfeld (DE)
(72) Erfinder: Axel, Schnippering, 58339 Breckerfeld (DE); Wiegand, Andreas, 58579 Dahlerbrück (DE)
(74) Vertreter: Patentanwälte Dörner & Kötter PartG mbB

(56) Entgegenhaltungen:
- EP-A1- 3 404 180
- CN-A- 104 354 811
- DE-U1- 29 901 184
- US-A1- 2001 030 405

## Beschreibung

Die Erfindung betrifft einen Roller, insbesondere Elektroroller, umfassend ein Trittelement und eine Lenkstange, die über eine Schwenkvorrichtung schwenkbar mit dem Trittelement verbunden ist, die ein an dem Trittelement befestigtes Basisteil und einen mit dem Basisteil über eine Achse schwenkbar verbundenen Schwenkarm umfasst, der mit der Lenkstange verbunden ist.

Mit einem Elektroantrieb versehene Roller, auch als E-Scooter bezeichnet, erfreuen sich zunehmender Beliebtheit. Die Vorteile dieser elektrisch angetriebenen Fahrzeuge gegenüber Kraftfahrzeugen sind im stadtnahen Bereich deutlich erkennbar. Sie sind umweltfreundlich und benötigen aufgrund ihres geringen Eigengewichtes wenig Energie. Insbesondere sind diese Fahrzeuge kompakt ausgestaltet und durch die Möglichkeit des Umlegens der Längssäule platzsparend verstaubar. Aufgrund ihrer Zusammenfaltbarkeit sind sie zudem einfach zu handhaben.

In der EP 4 019 379 A1 ist ein Elektroroller offenbart, der eine Lenkstange und ein Trittelement aufweist, die über eine arretierbare Schwenkvorrichtung zueinander schwenkbar miteinander verbunden sind. Die Lenkstange kann über die arretierbare Schwenkvorrichtung in eine im Wesentlichen zum Trittelement parallele Position verschwenkt werden. Ein weiterer Elektroroller mit einer Schwenkvorrichtung ist in der CN 104354811A, die alle Merkmale der Präambel des unabhängigen Anspruchs 1 offenbart.

Elektroroller der vorstehenden Art haben sich in der Praxis bewährt. Der Schwenkmechanismus ist manuell zu betätigen und verfügt in seinen Endstellungen (eingeklappte und ausgeklappte Position) über einen Rastmechanismus. Dieser Rastmechanismus unterliegt jedoch durch die sehr hohen Hebelkrafteinwirkungen und die andauernden Vibrationen des Rollers im Betrieb einem Verschleiß. Dieses kann lockere Raststellungen zur Folge haben, was wiederum zu Unsicherheiten im Fahrverhalten des Rollers führen kann. Daher müssen die bekannten Rastmechanismen regelmäßig überprüft und eingestellt werden und sind damit wartungsintensiv.

Hier will die Erfindung Abhilfe schaffen. Der Erfindung liegt die Aufgabe zugrunde, einen Roller, insbesondere einen Elektroroller bereitzustellen, bei dem der Verschleiß der Schwenkvorrichtung vermindert ist und dessen Klappmechanismus vereinfacht ist. Gemäß der Erfindung wird diese Aufgabe durch einen Roller mit den Merkmalen des kennzeichnenden Teils des Patentanspruchs 1 gelöst.

Mit der Erfindung ist ein Roller, insbesondere ein Elektroroller bereitgestellt, bei dem der Verschleiß der Schwenkvorrichtung vermindert ist und dessen Klappmechanismus vereinfacht ist. Dadurch, dass der Schwenkarm beabstandet zu der Achse wenigstens einen Zahnkranz oder einen Zahnkranzabschnitt aufweist, in den ein erstes Zahnrad eingreift, das auf einer ersten Welle angeordnet ist, die mit dem Basisteil drehbar verbunden ist und über einen angeordneten Antrieb drehbar ist, ist ein sanftes Verschwenken des Schwankarms der Schwenkvorrichtung erzielt, wodurch einem Verschleiß entgegengewirkt ist.

In Weiterbildung der Erfindung ist die erste Welle über ein Getriebe mit dem Antrieb verbunden. Hierdurch ist eine Untersetzung zwischen Antrieb und Schwenkbewegung ermöglicht.

In Ausgestaltung der Erfindung ist der Antrieb durch einen Elektromotor gebildet. Hierdurch ist ein komfortables Verschwenken der Lenkstange ermöglicht. Alternativ kann der Antrieb auch durch eine Kurbel gebildet sein, die manuell betätigbar ist.

In weiterer Ausgestaltung der Erfindung ist der Motor ein Getriebemotor, insbesondere ein Schneckengetriebemotor. Hierdurch ist eine große Untersetzung, verbunden mit einem geringen Bauraum erzielt. Ein Schneckengetriebe hat zudem den Vorteil, dass dieses selbsthemmend ist. Hierdurch ist ein manuelles Ein - oder Ausklappen der Lenkstange verhindert, wodurch im ausgeklappten Zustand eine sichere Endstellung mit einer damit einhergehenden hohen Fahrsicherheit bewirkt ist. Im eingeklappten Zustand ist zudem eine Diebstahlsicherung erzielt.

In Weiterbildung der Erfindung ist an dem Roller, insbesondere an dem mit der-Lenkstange verbundenen Lenker, ein Schalter angeordnet, der mit dem Elektromotor verbunden ist, der über diesen Schalter betätigbar ist. Hierdurch ist eine komfortable Bedienung des Elektromotors ermöglicht.

In Ausgestaltung der Erfindung ist an dem Roller eine Steuereinrichtung angeordnet, über die der Schalter mit dem Elektromotor verbunden ist und die derart eingerichtet ist, dass eine Betätigung des Elektromotors nur im Stillstand des Rollers möglich ist.

In Weiterer Ausgestaltung der Erfindung ist die Steuereinrichtung mit einem Bewegungssensor verbunden, der an dem Roller angeordnet ist und über den eine die Erfassung einer Drehbewehung eines Rades des Rollers ermöglicht ist. Beispielsweise kann der Bewegungssensor durch einen Geschwindigkeitssensor gebildet sein, der mit einem an dem Rad befestigten Magneten zusammenwirkt. Hierdurch ist eine Betätigung des Klappmechanismus während der Fahrt verhindert.

Erfindungsgemäß ist in den Schwenkarm eine Durchführung eingebracht, durch welche die erste Welle hindurchgeführt ist. Hierdurch ist eine Positionierung des Antriebs auf einer beliebigen Seite des Schwenkarms ermöglicht.

Dabei ist die Durchführung durch ein bogenförmiges Langloch gebildet. Hierdurch ist eine Führung des Schwenkarms während einer Schwenkbewegung durch die erste Welle ermöglicht. Bevorzugt ist Durchführung durch ein kreisbogenförmiges Langloch gebildet.

In weiterer Ausgestaltung der Erfindung ist das Basisteil aus zwei Hälften gebildet, zwischen denen der Schwenkarm schwenkbar gelagert ist. Hierdurch ist eine stabile Einfassung des Schwenkarms in dem Basisteil ermöglicht.

In weiterer Ausgestaltung der Erfindung weist der Schwenkarm zwei Schwenkarmhälften auf, zwischen denen ein Hohlraum gebildet ist. Hierdurch ist eine Gewichtsreduzierung des Schwenkarms bewirkt.

Unter den Begriffen "Hälfte" sowie "Schwenkarmhälfte" sind vorliegend nicht nur mathematisch definierte Anteile von 50 Prozent zu verstehen. Vielmehr ist unter einem aus zwei "Hälften" bestehenden Basisteil oder Schwenkarm zu verstehen, dass diese aus zwei Teilen zusammengesetzt sind, die jedenfalls annähernd gleiche Konturen aufweisen.

In Weiterbildung der Erfindung ist auf der ersten Welle beabstandet zu dem wenigstens einen ersten Zahnrad (ein erstes Zahnrad je Zahnkranzabschnitt) ein zweites Zahnrad angeordnet, das mit einem dritten Zahnrad im Eingriff ist, das auf einer zweiten Welle angeordnet ist, die mit dem Antrieb verbunden ist. Bevorzugt ist das zweite Zahnrad zwischen den beiden Schwenkarmhälften positioniert Hierdurch ist ein Getriebe gebildet, das sich bauraumsparend bereichsweise in den Schwenkarm hinein erstreckt. Alternativ kann das zweite Zahnrad auch außerhalb der beiden Schwenkarmhälften angeordnet sein.

In Ausgestaltung der Erfindung ist zwischen den beiden Schwenkarmhälften eine Gasdruckfeder (auch als Gasdruckdämpfer bezeichnet) angeordnet, deren Zylinder entweder mit dem Schwenkarm und deren Kolbenstange mit dem Basisteil verbunden ist oder deren Zylinder mit dem Basisteil und deren Kolbenstange mit dem Schwenkarm verbunden ist. Hierdurch ist eine Unterstützung und Abfederung der Schwenkbewegung des Schwenkarms bewirkt. Bevorzugt ist die Kolbenstange oder der Zylinder über eine drehbare Verbindung mit der erste Welle mit dem Basisteil verbunden.

In weiterer Ausgestaltung der Erfindung ist die Gasdruckfeder derart positioniert, dass ihre Kolbenstange in ausgeklappter Position des Schwenkarms der Schwenkvorrichtung ausgefahren ist und/oder in eingeklappter Position des Schwenkarms der Schwenkvorrichtung eingefahren ist. Hierdurch ist die Wirkung der Gasdruckfeder maximiert.

In Weiterbildung der Erfindung ist an dem Schwenkarm und an dem Basisteil jeweils wenigstens ein Anschlag angeordnet, wobei in eingeklappter und/oder in ausgeklappter Position des Schwenkarms der Schwenkvorrichtung ein Anschlag des Schwenkarms an einem Anschlag des Basisteils anliegt. Hierdurch ist eine definierte, stabile Endlage der Lenkstange erzielt.

In Ausgestaltung der Erfindung ist wenigstens ein Anschlag des Schwenkarms und/oder des Basisteils mit einer elastischen Beschichtung, vorzugsweise einer Gummi- oder Kunststoffbeschichtung versehen. Hierdurch ist ein sanfter Anschlag des Schwenkarms in eine Endposition bewirkt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

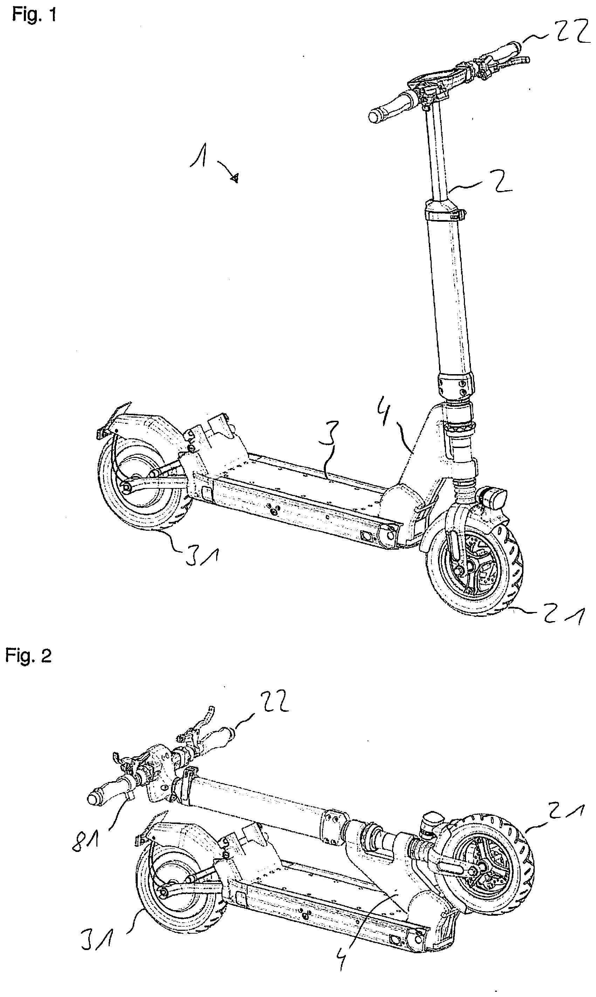

- Figur 1: die Darstellung eines Elektrorollers;
- Figur 2: die Darstellung des Elektrorollers aus Figur 1 mit eingeklappter Lenkstange;

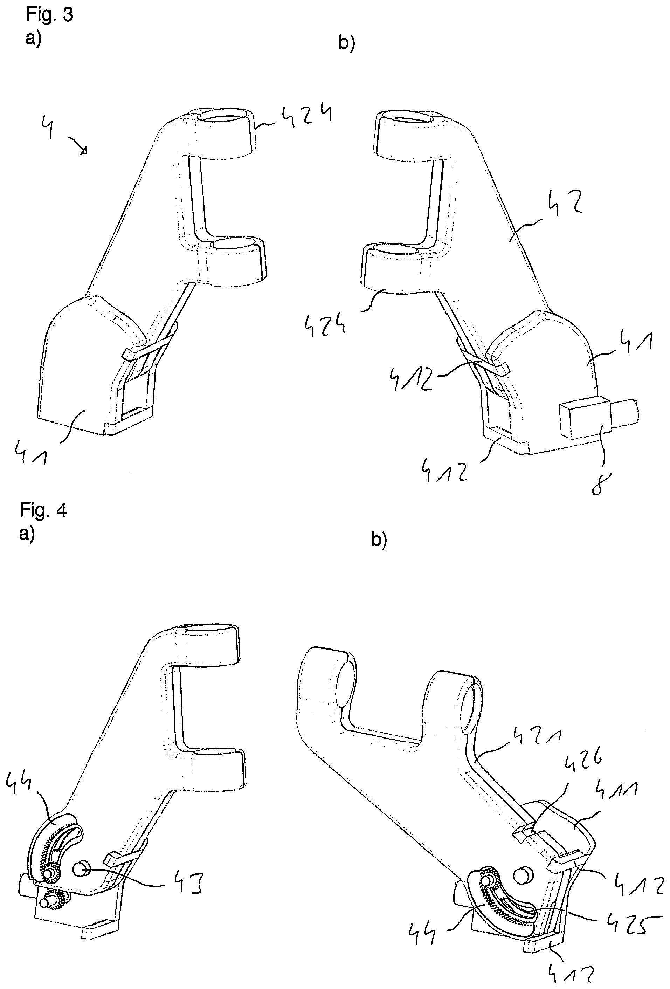

- Figur 3: Die Darstellung der Schwenkvorrichtung des Rollers aus Figur 1
a) in einer ersten Seitenansicht;
b) in einer zweiten Seitenansicht;
- Figur 4: die Darstellung der Schwenkvorrichtung aus Figur 3 nach Entfernung einer Hälfte des Basisteils
a) in einer ersten Schwenkposition (Lenker ausgeklappt);
b) in einer zweiten Schwenkposition (Lenker eingeklappt);

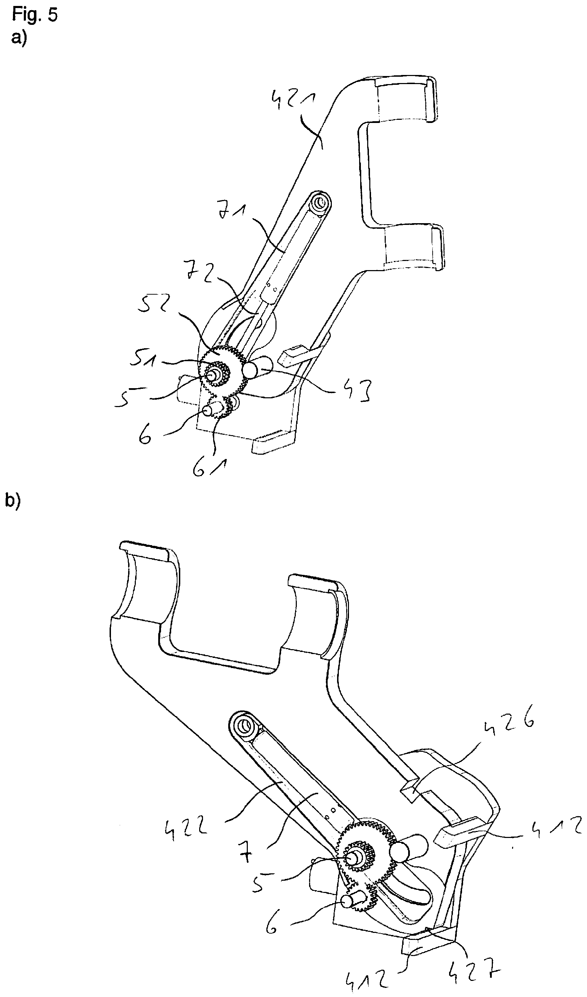

- Figur 5: die Darstellung der Schwenkvorrichtung aus Figur 4 nach Entfernung einer Schwenkarmhälfte
a) in einer ersten Schwenkposition (Lenker ausgeklappt);
b) in einer zweiten Schwenkposition (Lenker eingeklappt);

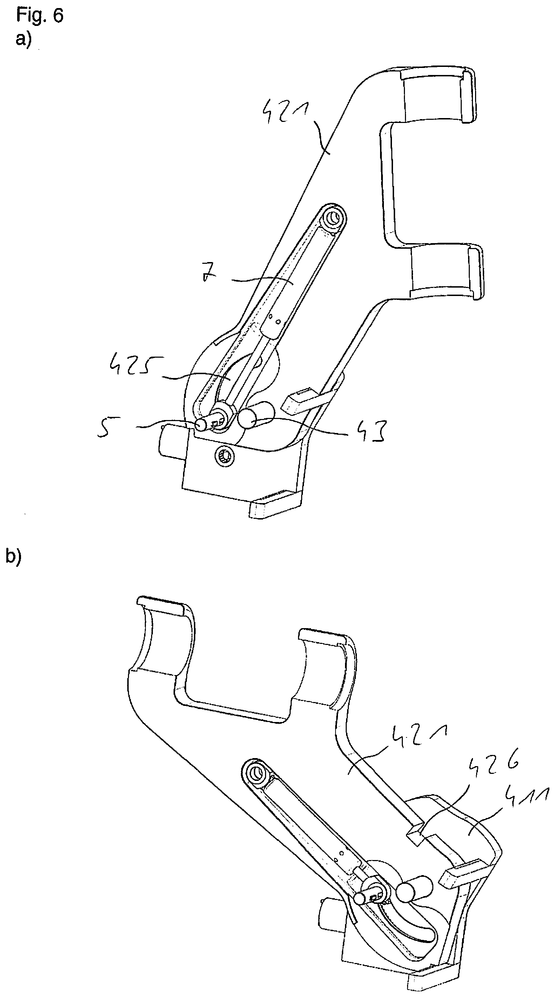

- Figur 6: die Darstellung der Schwenkvorrichtung aus Figur 5 nach Entfernung der Zahnräder und der zweiten Welle
a) in einer ersten Schwenkposition (Lenker ausgeklappt);
b) in einer zweiten Schwenkposition (Lenker eingeklappt);

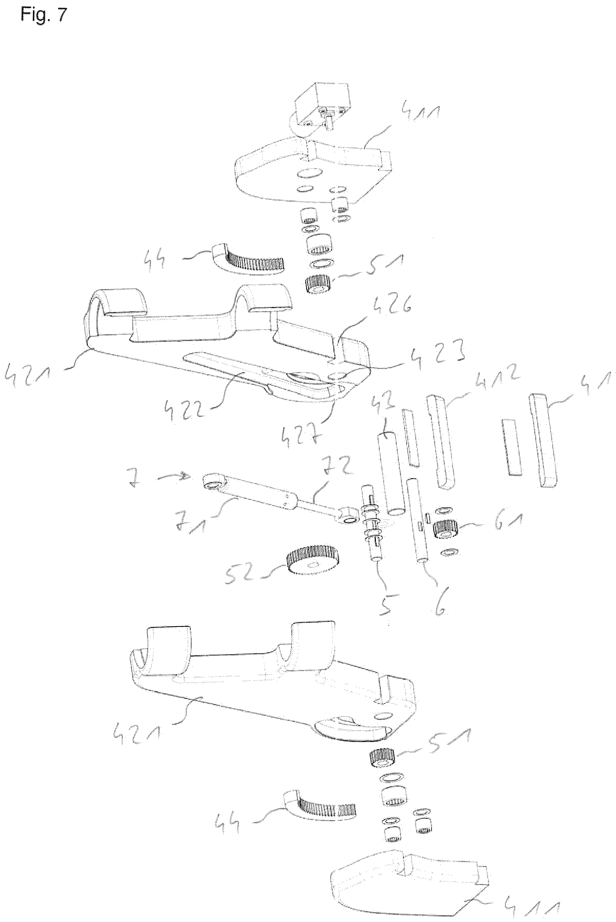

- Figur 7: die Darstellung der Schwenkvorrichtung aus Figur 3 in einer Explositionsdarstellung.

Der als Ausführungsbeispiel gewählte Elektroroller 1 umfasst eine Lenkstange 2 und ein Trittelement 3, die über eine Schwenkvorrichtung 4 zueinander schwenkbar miteinander verbunden sind. Die Lenkstange 2 ist zur Längenverstellung teleskopierbar ausgebildet und an einer Seite mit einem Vorderrad 21 sowie an der diesen gegenüberliegenden Seite mit einem Lenker 22 versehen. An dem Trittelement 3 ist heckseitig ein Hinterrad 31 über eine Hinterradschwinge 32 mit dem Trittelement 3 verbunden. Hinterrad 31 und Vorderrad 21 sind mit einem - nicht dargestellten - Elektroantrieb verbunden. Die Lenkstange 2 kann über die Schwenkvorrichtung 4 in eine im Wesentlichen zum Trittelement 3 parallele Position verschwenkt werden.

Die Schwenkvorrichtung 4 umfasst im Wesentlichen ein Basisteil 41, das mit einem Schwenkarm 42 schwenkbar verbunden ist. Das Basisteil 41 ist aus zwei Hälften 411 zusammengesetzt, die über zwei Anschlagstücke 412 sowie ein Achse 43 miteinander verbunden sind.

Der Schwenkarm 42 ist aus zwei Schwenkarmhälften 421 zusammengesetzt, zwischen denen ein Hohlraum 422 begrenzt ist. Der Schwenkarm 42 ist über die Achse 43, die durch eine hierzu vorgesehene Bohrung 423 geführt ist, schwenkbar zwischen den Hälften 411 des Basisteils 41 mit diesem verbunden. Endseitig weist der Schwenkarm 42 beabstandet zueinander zwei Schellenkörper 424 auf, in denen die Lenkstange 2 drehbar gelagert ist. Außen sind an dem Schwenkarm 42 beabstandet zueinander ein erster Anschlag 426 und ein zweiter Anschlag 427 angeordnet, die derart positioniert sind das der erste Anschlag in ausgeklapter Position des Schwenkarms 42 an einem erstes Anschlagstück 412 des Basisteils 41 anliegt und in eingeklapter Position des Schwenkarms 42 an dem zweiten Anschlagstück 412 des Basisteils 41 anliegt. Die Anschlagstücke 412 sind im Ausführungsbeispiel an ihrer dem jeweils an diesen anliegenden Anschlag 426, 427 zugewandten Anschlagfläche mit einer Gummischicht versehen. Alternativ oder zusätzlich können auch die Anschläge 426, 427 mit einer Gummischicht versehen sein. Anstatt einer Gumischicht kann auch eine elastische Kunststoffschicht vorgesehen sein.

Beabstandet zu der Bohrung 423 ist in den Schwenkarm 42 eine kreisbogenförmige Durchführung 425 eingebracht, deren Kreisbogenmittelpunkt dem Mittelpunkt der Achse 43 entspricht. Auf ihrer der Achse 43 abgewandten Seite der Durchführung 425 ist an diese angrenzend auf beiden Seiten des Schwenkarms 42 jeweils ein Zahnkranzabschnitt 44 mit einer der Durchführung 425 zugewandten Innenverzahnung angeordnet. Alternativ oder zusätzlich kann auch jeweils ein Zahnkranzabschnitt mit einer Außenverzahnung an der Achse 43 zugewandten Seite der Durchführung 425 angeordnet sein.

Durch die Durchführung 425 ist eine erste Welle 5 geführt, die in den gegenüberliegend angeordneten Hältfet 411 des Basisteils 41 drehbar gelagert sind. Auf der ersten Welle 5 sind beabstandet zueinander zwei erste Zahnräder 51 angeordnet, die in die Innenverzahnung jeweils eines Zahnkranzabschnitts 44 eingreift. Weiterhin ist auf der ersten Welle 5 mittig zwischen den beiden ersten Zahnrädern 51 innerhalb des Hohlraums 422 des Schwenkarms 42 ein zweites Zahnrad 52 angeordnet, das bereichsweise aus diesem herausragt.

In dem Hohlraum 422 des Schwenkarms 42 ist weiterhin eine Gasdruckfeder 7 angeordnet, dessen Zylinder 71 endseitig schwenkbar mit dem Schwenkarm 42 verbunden ist und dessen Kolbenstange 72 schwenkbar mit ersten Welle 5 diese umgreifend verbunden ist. Bei einer Bewegung des Schwenkarms 42 relativ zur ersten Welle 5 bewegt sich diese entlang der kreisbogenförmigen Durchführung 425 und die Kolbenstange 72 wird aus dem Zylinder 71 herausgezogen oder in diesen hineingeschoben, wobei durch die mögliche Schwenkbewegung des Zylinders 71 in dem Hohlraum 422 ein Verklemmen der Kolbenstange 71 in dem Zylinder 71 verhindert ist.

Beabstandet zu dem Schwenkarm 42 ist in dem Basisteil 41 eine zweite Welle 6 angeordnet, die in dessen gegenüberliegend angeordneten Hälften 411 drehbar gelagert ist. Auf der zweiten Welle 6 ist ein drittes Zahnrad 61 angeordnet, das mit dem bereichsweise aus dem Hohlraum 422 des Schwenkarms 42 herausragenden zweiten Zahnrad 52 in Eingriff ist. Die über die Zahnräder 51, 52, 61 verbundenen Wellen 5, 6 bilden ein bauraumoptimiertes Getriebe zum untersetzten Antrieb des Schwenkarms 42 aus.

Die Welle 6 ist mit einem außen an dem Basisteil 41 angeordneten Elektromotor 8 verbunden, über den sie in beiden Drehrichtungen antreibbar ist. Der Elektromotor ist im Ausführungsbeispiel ein Schneckengetriebemotor. Der Elektromotor 8 über eine - nicht dargestellte - Steuerung einem an dem Lenker angeordneten Schalter 81 verbunden, über den der Elektromotor 8 in beiden Richtungen (Einklappen / Ausklappen) betätigbar ist. An einer an der Lenkstange 2 angeordneten Gabel, die das Vorderrad 21 aufnimmt, ist ein - nicht dargestellter - Geschwindigkeitsmesssensor angeordnet, der mit einem an dem Vorderrad 21 angeordneten - nicht dargestellten - Magneten zusammenwirkt und der mit der Steuerung verbunden ist. Die Steuerung ist derart eingerichtet, dass eine Betätigung des Elektromotors 8 über den Schalter 81 nur bei Stillstand des Vorderrades 21 möglich ist.

Die zum Einklappen oder Ausklappen der Lenkstange notwendige Krafteinleitung erfolgt über den als Schneckengetriebemotor ausgeführten Elektromotor 8, der über das aus den über die Zahnräder 51, 52, 61 verbundenen Wellen 5, 6 gebildete Getriebe, welches das Drehmoment des Elektromotors 8 über den Zahnkranzabschnitt 44 auf den Schwenkarm 42 überträgt.

Wird der Schwenkarm 42 in eine seiner Anschlagpositionen bewegt, wird der getriebemäßig sehr hoch übersetzte Elektromotor 8 bis in seine höchste Drehmomentlage gebracht. Die Drehzahl des Motors geht durch den hohen mechanischen Widerstand auf Null Umdrehungen und der Elektromotor 8 schaltet durch eine hohe Stromzufuhr regelungstechnisch ab und verbleibt in seiner Lage. Die kraftübertragenden Zahnräder 51, 52, 61 stehen unter mechanischer Spannung und zwingen den Schwenkarm 42 mit hohem Drehmoment in die eingenommene Anschlagstellung. Das in der Getriebeeinheit des als Schneckenradgetriebemotor ausgebildeten Elektromotors 8 eingebaute Schneckenzahnrad verhindert, dass die rückwirkenden Kräfte der aufgebauten mechanischen Spannung des Schwenkarms die Motorachse des Elektromotors 8 in Drehbewegung versetzen. Der Schwenkarm 42 und die mit diesem verbundene Lenkstange 2 verharrt dauerhaft in ihrer Position bis der Elektromotor 8 durch den Schalter 81 in die entgegengerichtete Drehrichtung angesteuert wird. Auch ein immer wiederkehrendes Anfahren in die Anschlagpositionen des Schwenkarms 42 verursacht keinen Zustand, der ein Lockern des Schwenkarms 42 und der mit diesem verbundenen Lenkstange relativ zum Trittelement 3 zur Folge hat - auch nicht beim Verschleiß einzelner mitwirkender Bauteile.

## Patentansprüche

1. Roller, insbesondere Elektroroller (1), umfassend ein Trittelement (3) und eine Lenkstange (2), die über eine Schwenkvorrichtung schwenkbar mit dem Trittelement (3) verbunden ist und die ein an dem Trittelement (3) befestigtes Basisteil (41) und einen mit dem Basisteil (41) über eine Achse (43) schwenkbar verbundenen Schwenkarm (42) umfasst, der mit der Lenkstange (2) verbunden ist, wobei der Schwenkarm (42) beabstandet zu der Achse (43) wenigstens einen Zahnkranz oder einen Zahnkranzabschnitt (44) aufweist, in den ein erstes Zahnrad (51) eingreift, das auf einer ersten Welle (5) angeordnet ist, die mit dem Basisteil (41) drehbar verbunden ist und über einen angeordneten Antrieb drehbar ist, **dadurch gekennzeichnet, dass** in den Schwenkarm (42) eine Durchführung (425) eingebracht ist, durch welche die erste Welle (5) durchgeführt ist, wobei die Durchführung (425) durch ein bogenförmiges Langloch gebildet ist.

2. Roller nach Anspruch 1, **dadurch gekennzeichnet, dass** die erste Welle (5) über ein Getriebe mit dem Antrieb verbunden ist.

3. Roller nach Anspruch 1 oder 2, **dadurch gekennzeichnet, dass** der Antrieb durch einen Elektromotor (8) gebildet ist, der bevorzugt ein Getriebemotor, insbesondere ein Schneckengetriebemotor ist.

4. Roller nach Anspruch 3, **dadurch gekennzeichnet, dass** an dem Roller (1), insbesondere an dem mit der Lenkstange (2) verbundenen Lenker (22), ein Schalter (81) angeordnet ist, der mit dem Elektromotor (8) verbunden ist, der über diesen Schalter (81) betätigbar ist.

5. Roller nach Anspruch 4, **dadurch gekennzeichnet, dass** an dem Roller (1) eine Steuereinrichtung angeordnet ist, über die der Schalter (81) mit dem Elektromotor (8) verbunden ist und die derart eingerichtet ist, dass eine Betätigung des Elektromotors (8) nur im Stillstand des Rollers (1) möglich ist.

6. Roller nach Anspruch 5, **dadurch gekennzeichnet, dass** die Steuereinrichtung mit einem Bewegungssensor verbunden ist, der an dem Roller (1) angeordnet ist und über den die Erfassung einer Drehbewegung eines Rades (21, 31) des Rollers (1) ermöglich ist., wobei der Bewegungssensor vorzugsweise durch einen Geschwindigkeitssensor gebildet ist, der mit einem an dem Rad (21, 31) befestigten Magneten zusammenwirkt.

7. Roller nach einem der vorgenannten Ansprüche, **dadurch gekennzeichnet, dass** die Durchführung (425) durch ein kreisbogenförmiges Langloch gebildet ist.

8. Roller nach einem der vorgenannten Ansprüche, **dadurch gekennzeichnet, dass** das Basisteil (41) aus zwei Hälften (411) gebildet ist, zwischen denen der Schwenkarm (42) schwenkbar gelagert ist.

9. Roller nach einem der vorgenannten Ansprüche, **dadurch gekennzeichnet, dass** der Schwenkarm (42) zwei Schwenkarmhälften (421) aufweist, zwischen denen ein Hohlraum (422) gebildet ist.

10. Roller nach Anspruch 9, **dadurch gekennzeichnet, dass** auf der ersten Welle (5) beabstandet zu dem wenigstens einen ersten Zahnrad (51) ein zweites Zahnrad (52) angeordnet ist, das mit einem dritten Zahnrad (61) im Eingriff ist, das auf einer zweiten Welle (6) angeordnet ist, die mit dem Antrieb verbunden ist, wobei das zweite Zahnrad (52) bevorzugt zwischen den beiden Schwenkarmhälften (421) positioniert ist.

11. Roller nach Anspruch 9 oder 10, **dadurch gekennzeichnet, dass** zwischen den beiden Schwenkarmhälften (421) eine Gasdruckfeder (7) angeordnet ist, deren Zylinder (71) entweder mit dem Schwenkarm (42) und deren Kolbenstange (72) mit dem Basisteil (41) verbunden ist oder deren Zylinder (71) mit dem Basisteil (41) und deren Kolbenstange (72) mit dem Schwenkarm (42) verbunden ist.

12. Roller nach Anspruch 11, **dadurch gekennzeichnet, dass** die Kolbenstange (72) oder der Zylinder (71) über eine drehbare Verbindung mit der ersten Welle (5) mit dem Basisteil (41) verbunden ist.

13. Roller nach Anspruch 11 oder 12, **dadurch gekennzeichnet, dass** die Gasdruckfeder (7) derart positioniert ist, dass ihre Kolbenstange (72) in ausgeklappter Position des Schwenkarms (42) ausgefahren ist und/oder in eingeklappter Position des Schwenkarms (42) eingefahren ist.

14. Roller nach einem der vorgenannten Ansprüche, **dadurch gekennzeichnet, dass** an dem Schwenkarm (42) und an dem Basisteil (41) jeweils wenigstens ein Anschlag (426, 427) angeordnet ist, wobei in eingeklappter und/oder in ausgeklappter Position des Schwenkarms (42) ein Anschlag (426, 427) des Schwenkarms (42) an einem Anschlag des Basisteils (41) anliegt.

15. Roller nach Anspruch 14, **dadurch gekennzeichnet, dass** wenigstens ein Anschlag (426, 427) des Schwenkarms (42) und/oder des Basisteils (41) mit einer elastischen Beschichtung, vorzugsweise einer Gummi- oder Kunststoffbeschichtung versehen ist.

## Claims

1. Scooter, in particular electric scooter (1), comprising a deck element (3) and a steering column (2) that is connected to the deck element (3) in a swivelling manner by means of a swivelling device and that comprises a basic part (41) attached to the deck element (3) and a swivel arm (42) connected to the basic part (41) in a swivelling manner by means of an axis (43), with the swivel arm being connected to the steering column (2), where the swivel arm (42) has, at a distance from the axis (43), at least one sprocket or one sprocket section (44) with which a first gear (51) meshes that is arranged on a first shaft (5) that is rotatably connected to the basic part (41) and that can be rotated by means of an arranged drive, **characterised in that** a passage (425) through which the first shaft (5) is guided is introduced into the swivel arm (42), where the passage (425) is formed by an arched oblong hole.

2. Scooter according to claim 1, **characterised in that** the first shaft (5) is connected to the drive by means of a transmission.

3. Scooter according to claim 1 or 2, **characterised in that** the drive is formed by an electric motor (8) that preferably is a gear motor, in particular a worm gear motor.

4. Scooter according to claim 3, **characterised in that** a switch (81) is arranged on the scooter (1), specifically on the handlebar (22) connected to the steering column (2), the switch being connected to the electric motor (8) that can be actuated by means of this switch (81).

5. Scooter according to claim 4, **characterised in that** a control device by means of which the switch (81) is connected to the electric motor (8) is arranged on the scooter (1), this control device being configured so that the electric motor (8) can only be actuated when the scooter (1) is standing still.

6. Scooter according to claim 5, **characterised in that** the control device is connected to a motion sensor that is arranged on the scooter (1) and by means of which a rotating movement of a wheel (21, 31) of the scooter (1) can be recorded, where the motion sensor is preferably formed by a speed sensor that interacts with a magnet attached to the wheel (21, 31).

7. Scooter according to one of the preceding claims, **characterised in that** the passage (425) is formed by a circular-arc shaped oblong hole.

8. Scooter according to one of the preceding claims, **characterised in that** the basic part (41) is formed of two halves (411) between which the swivel arm (42) is held in a swivelling manner.

9. Scooter according to one of the preceding claims, **characterised in that** the swivel arm (42) has two swivel arm halves (421) between which a cavity (422) is formed.

10. Scooter according to claim 9, **characterised in that** a second gear (52) is arranged on the first shaft (5) at a distance from the at least one first gear (51) and meshing with a third gear (61) that is arranged on a second shaft (6) that is connected to the drive, where the second gear (52) is preferably positioned between the two swivel arm halves (421).

11. Scooter according to claim 9 or 10, **characterised in that** a gas pressure spring (7) is arranged between the two swivel arm halves (421) and that either the cylinder (71) of the gas pressure spring is connected to the swivel arm (42) and its piston rod (72) to the basic part (41), or its cylinder (71) is connected to the basic part (41) and its piston rod (72) to the swivel arm (42).

12. Scooter according to claim 11, **characterised in that** the piston rod (72) or the cylinder (71) is connected to the basic part (41) by means of a rotatable connection to the first shaft (5).

13. Scooter according to claim 11 or 12, **characterised in that** the gas pressure spring (7) is positioned so that its piston rod (72) is unfolded in the extended position of the swivel arm (42) and/or retracted in the folded position of the swivel arm (42).

14. Scooter according to one of the preceding claims, **characterised in that** at least one stop (426, 427) is arranged on the swivel arm (42) and the basic part (41) each, where a stop (426, 427) of the swivel arm (42) is in contact with a stop of the basic part (41) in the unfolded and/or folded position of the swivel arm (42).

15. Scooter according to claim 14, **characterised in that** at least one stop (426, 427) of the swivel arm (42) and/or of the basic part (41) is provided with an elastic coating, preferably a rubber or plastic coating.

## Revendications

1. Trottinette, en particulier trottinette électrique (1), comprenant un élément repose-pieds (3) et une barre de direction (2) reliée pivotante avec l'élément repose-pieds (3) via un dispositif de pivotement, et qui comprend une pièce de base (41) fixée contre l'élément repose-pieds (3), ainsi qu'un bras pivotant (42) relié pivotant via un axe (43) avec la pièce de base (41), lequel bras est relié avec la barre de direction (2), sachant que le bras pivotant (42) présente, à distance de l'axe (43), au moins une couronne dentée ou un segment (44) de couronne dentée dans lequel engrène un premier pignon (51) disposé sur un premier arbre (5) qui est relié tournant avec la pièce de base (41) et qui peut tourner via un entraînement agencé, **caractérisée en ce que** dans le bras pivotant (42) a été ménagé un passage (425) traversé par le premier arbre (5), sachant que le passage (425) est formé par un trou oblong de forme arquée.

2. Trottinette selon la revendication 1, **caractérisée en ce que** le premier arbre (5) est relié via une transmission avec l'entraînement.

3. Trottinette selon la revendication 1 ou 2, **caractérisée en ce que** l'entraînement est formé par un moteur électrique (8) qui est de préférence un motoréducteur, en particulier un motoréducteur à vis sans fin.

4. Trottinette selon la revendication 3, **caractérisée en ce que** contre la trottinette (1), en particulier contre le guidon (22) relié avec la barre de direction (2), est disposé un interrupteur (81) relié avec le moteur électrique (8), lequel peut être actionné via cet interrupteur (81).

5. Trottinette selon la revendication 4, **caractérisée en ce que** contre la trottinette (1) est disposé un dispositif de commande via lequel l'interrupteur (81) est relié avec le moteur électrique (8), et qui est configuré de sorte qu'un actionnement du moteur électrique (8) n'est possible que lorsque la trottinette (1) est immobile.

6. Trottinette selon la revendication 5, **caractérisée en ce que** le dispositif de commande est relié avec un capteur de mouvement disposé contre la trottinette (1) et via lequel est possible la saisie d'un mouvement rotatif d'une roue (21, 31) de la trottinette (1), sachant que le capteur de mouvement est formé de préférence par un capteur de vitesse qui interagit avec un aimant fixé contre la roue (21, 31).

7. Trottinette selon l'une des revendications précédentes, **caractérisée en ce que** le passage (425) est formé par un trou oblong de forme arquée.

8. Trottinette selon l'une des revendications précédentes, **caractérisée en ce que** la pièce de base (41) est formée de deux moitiés (411) entre lesquelles le bras pivotant (42) se trouve en appui pivotant.

9. Trottinette selon l'une des revendications précédentes, **caractérisée en ce que** le bras pivotant (42) présente deux moitiés (421) de bras pivotant formant entre elles une cavité (422).

10. Trottinette selon la revendication 9, **caractérisée en ce que** sur le premier arbre (5), à distance d'au moins un premier pignon (51), est disposé un deuxième pignon (52) qui engrène dans un troisième pignon (61) disposé sur un deuxième arbre (6), arbre qui est lui-même relié avec l'entraînement, sachant que le deuxième pignon (52) est positionné de préférence entre les deux moitiés (421) de bras pivotant.

11. Trottinette selon la revendication 9 ou 10, **caractérisée en ce qu'**entre les deux moitiés (421) de bras pivotant est disposé un amortisseur à gaz (7) dont soit le cylindre (71) est relié avec le bras pivotant (42) et sa tige (72) de piston avec la pièce de base (41), soit le cylindre (71) est relié avec la pièce de base (41) et sa tige (72) de piston avec le bras pivotant (42).

12. Trottinette selon la revendication 11, **caractérisée en ce que** la tige (72) de piston ou le cylindre (71) est relié via une jonction tournante avec le premier arbre (5) avec la pièce de base (41).

13. Trottinette selon la revendication 11 ou 12, **caractérisée en ce que** l'amortisseur à gaz (7) est positionné de sorte que sa tige (72) de piston soit sortie lorsque le bras pivotant (42) est en position dépliée, et/ou qu'elle soit rentrée lorsque le bras pivotant (42) est en position repliée.

14. Trottinette selon l'une des revendications précédentes, **caractérisée en ce que** contre le bras pivotant (42) et contre la pièce de base (41) est disposée respectivement au moins une butée (426, 427), sachant qu'en position repliée et/ou en position dépliée du bras pivotant (42), une butée (426, 427) du bras pivotant (42) applique contre une butée de la pièce de base (41).

15. Trottinette selon la revendication 14, **caractérisée en ce qu'**au moins une butée (426, 427) du bras pivotant (42) et/ou de la pièce de base (41) est munie d'un revêtement élastique, de préférence d'un revêtement en caoutchouc ou en matière plastique.
